# FASCICULE DE BREVET EUROPEEN

(11) **EP 2 758 285 B1**
(45) Date de publication et mention de la délivrance du brevet: **30.09.2015**
(21) Numéro de dépôt: 12743509.7
(22) Date de dépôt: 12.07.2012
(51) Int. Cl.: B60R 21/34, B60R 19/52

(54) **BLOC PARE-CHOCS AVANT DE VEHICULE.**
VORDERSTOSSFÄNGERANORDNUNG FÜR EIN FAHRZEUG
VEHICLE FRONT BUMPER ASSEMBLY

(30) Priorité: 22.09.2011 FR 1158420
(43) Date de publication de la demande: 30.07.2014
(73) Titulaire: Peugeot Citroën Automobiles SA, 78140 Vélizy Villacoublay (FR)
(72) Inventeur: BENANE, Said, F-94550 Chevilly Larue (FR)
(86) Numéro de dépôt international: PCT/FR2012/051660
(87) Numéro de publication internationale: WO 2013/041788

(56) Documents cités:
- DE-A1-102006 059 974
- FR-A1- 2 832 679
- US-A- 3 926 462
- US-A- 5 478 127
- US-A1- 2009 072 557

## Description

L'invention a trait à un dispositif de pare-chocs avant pour véhicule automobile répondant aux exigences concernant le choc-piéton au niveau des jambes dudit piéton.

De tels dispositifs de pare-chocs sont connus de l'art antérieur. Un exemple en est donné par le document FR2832679 qui décrit un ensemble pour véhicule automobile comprenant une peau de pare-chocs et une poutre rigide d'impact dont un tronçon central est disposé en arrière de la peau de pare-chocs par rapport au sens de la marche du véhicule pour former une zone inférieure de percussion du tibia d'un piéton. La poutre d'impact va permettre de percuter le piéton sous son genou et plus précisément au niveau du tibia. La poutre d'impact présente des zones de moindre résistance de sorte qu'en cas de choc le tronçon central de ladite poutre va reculer. L'ensemble présente également un absorbeur de chocs disposé au niveau d'une zone supérieure de percussion qui entre en contact avec la jambe au niveau ou au dessus du genou et qui recule également en cas de choc. L'enfoncement respectif des zones inférieure et supérieure de percussion est tel que la flexion subie par le genou est inférieure à 15° si bien que les dommages infligés au genou sont réduits.

Il est également connu de disposer les absorbeurs de chocs de la zone supérieure de percussion à l'avant d'une poutre rigide d'impact supérieure qui est destinée à la protection du moteur du véhicule. L'absorbeur de chocs rempli sa fonction en se déformant et en s'enfonçant sur lui-même. Pour ce faire il présente classiquement une face avant et une face arrière et une pluralité de nervures s'étendant perpendiculairement entre les faces avant et arrière.

Des problèmes peuvent survenir lorsque pour des raisons de style, on impose un galbage de la peau de pare-chocs au niveau des optiques de phares, ce galbage impliquerait des réductions des côtes internes qui devraient être reportées au niveau de l'absorbeur de chocs supérieur. Ledit absorbeur risquerait alors de ne plus présenter la stabilité nécessaire à son fonctionnement, ni une résistance à l'enfoncement suffisante pour l'homologation du véhicule en choc-piéton. Imposer un galbage sur la face avant de l'absorbeur de chocs impliquerait de modifier l'angle relatif des nervures par rapport à ladite face avant dudit absorbeur. N'étant plus perpendiculaires à cette face avant, les nervures se déformeraient trop vite en cas de collision et ne seraient plus en mesure d'assurer leur fonction. Le document DE 10 2006 059 974 A1 présente un ensemble selon le préambule de la revendication 1 et un absorbeur selon le préambule de la revendication 8. L'invention a pour objectif de répondre à au moins un des problèmes présentés par l'art antérieur, en particulier en proposant un nouvel ensemble pour véhicule automobile permettant d'accentuer localement le galbage de la peau de pare-chocs tout en répondant aux exigences concernant le choc piéton.

A cet effet l'invention a pour objet un ensemble pour véhicule, avec les caractéristiques de la revendication 1.

Selon des modes particuliers de réalisation, l'ensemble peut comprendre l'une ou plusieurs des caractéristiques suivantes, prises isolément ou selon toutes les combinaisons techniquement possibles :
- la grille est disposée inférieure à l'absorbeur de chocs supérieur selon la hauteur
   de véhicule ;
- l'absorbeur de chocs supérieur présente une face avant et une face arrière, la grille d'entrée d'air présente au moins une patte de fixation et de préférence deux pattes de fixation pour sa fixation sur l'absorbeur de chocs supérieur et la ou lesdites pattes de fixation sont configurées pour se placer sur la face avant de l'absorbeur de chocs supérieur en vue de la fixation de ladite grille ;
- la ou les pattes de fixations de la grille d'entrée d'air présentent des moyens de fixation à l'absorbeur de chocs supérieur et une surface destinée à être placée en appui contre la face avant de l'absorbeur de chocs supérieur lorsque la grille d'entrée d'air est fixée sur ledit absorbeur ;
- la fixation de la grille d'entrée sur la ou les nervures horizontales se fait par emboitage élastique, de préférence la ou les pattes de fixation présentent chacune un clip permettant de pincer la nervure horizontale en regard de laquelle elle est placée ;
- la ou les pattes de fixation de la grille d'entrée d'air sont dimensionnées pour présenter chacune une largeur au moins égale à la largeur de la nervure horizontale en regard de laquelle elles sont chacune placées en vue de la fixation de ladite grille sur ledit absorbeur et de préférence la largeur desdites pattes de fixation est au moins égale à la largeur présentée par l'ensemble formé d'une nervure horizontale encadrée par deux nervures verticales de sorte à répartir un effort appliqué sur la patte de fixation lors d'une collision sur plusieurs nervures ;
- la ou les pattes de fixation présentent une forme biseautée de telle sorte à varier en épaisseur selon leur largeur, si bien qu'un côté d'une patte est plus épais que l'autre côté, de préférence le côté le plus épais des pattes de fixation présente une épaisseur inférieure ou égale à la profondeur du décrochage mesuré sur l'absorbeur de chocs supérieur ;
- la peau de pare-chocs présentant un centre et des bords latéraux, et le biseau présenté par les pattes de fixation, est orienté pour que lesdites pattes présentent une épaisseur décroissante selon une direction parallèle à la direction transversale du véhicule et dans le sens allant du centre de la peau de pare-chocs vers ses bords latéraux.

L'invention a également pour objet un absorbeur de chocs supérieur avec les caractéristiques de la revendication 8.

Enfin l'invention a pour objet un véhicule remarquable en ce qu'il présente un ensemble tel que défini plus avant.

On aura compris à la lecture de la définition qui vient d'en être donnée que l'invention consiste selon un premier aspect à réduire localement l'épaisseur de l'absorbeur de chocs supérieur au niveau du galbage de la peau de pare-chocs imposé par le dessin de la carroserie. Cette réduction d'épaisseur permet de conserver une disposition sensiblement parallèle des faces avant et arrière de l'absorbeur de chocs. Ceci est particulièrement avantageux lorsque l'absorbeur de chocs présente une structure interne comprenant des nervures nécessitant pour leur bon fonctionnement d'être orientées sensiblement perpendiculairement par rapport auxdites faces avant et arrière. La zone présentant une réduction locale d'épaisseur permet de conserver une orientation des forces appliquées sur l'absorbeur qui soit parallèle aux nervures.

L'invention consiste ensuite à fixer la grille d'entrée d'air sur l'absorbeur de chocs supérieur au niveau de cette zone présentant réduction locale d'épaisseur afin de la compenser. Les pattes de fixations peuvent être placées dans le jeu généré entre l'absorbeur de chocs et la peau de pare-chocs par le galbage de ladite peau de pare-chocs. Les pattes de fixation de la grille se placent donc en avant de l'absorbeur de chocs supérieur et vont venir en contact avec la peau de pare-chocs en cas de collision. La force exercée sur les pattes de fixation de la grille par la peau de pare-chocs lors d'une collision est transmise à l'absorbeur de chocs. De la sorte la diminution locale d'épaisseur présentée par l'absorbeur de chocs est rattrapée et il est possible de faire travailler l'absorbeur de chocs le plus tôt possible. Les pattes de fixation présentent des moyens de fixation à l'absorbeur de chocs et une surface de contact ou d'appui utile pour la transmission de la force générée par une collision à l'absorbeur de chocs. Les pattes de fixation sont donc remarquables en ce qu'elles présentent une triple fonction : fixer la grille et transmettre une force, et répartir cette force sur une surface donnée lors de sa transmission.

Selon un deuxième aspect, l'absorbeur de chocs présente une succession de nervures horizontales et verticales et les moyens de fixation de la grille sont des clips destinés à venir se fixer chacun sur une des nervures horizontales dudit absorbeur. La prise en sandwich de ladite nervure va permettre de guider la déformation de la nervure lors d'une collision. L'absorbeur de choc présente donc un ajour sur sa face avant pour le passage des moyens de fixation.

Selon un troisième aspect, les pattes de fixation présentent chacune une largeur supérieure ou égale à au moins une nervure horizontale. De préférence, elles présentent une largeur suffisante pour couvrir au moins une nervure horizontale et une nervure verticale, de préférence encore elles couvrent, en largeur, une nervure horizontale et les deux nervures verticales disposées de part et d'autre de la nervure horizontale. La largeur de la patte de fixation lui permet d'appuyer sur plusieurs nervures à la fois et de répartir donc l'effort qui lui est appliqué lors de sa transmission à l'absorbeur de chocs. La résistance présentée par plusieurs nervures permet une contrôler la vitesse d'enfoncement présentée par l'absorbeur.

Selon un quatrième aspect, les pattes de fixation présentent une forme biseautée selon leur épaisseur. Chaque biseau est orienté de telle sorte à ce que le côté de plus faible épaisseur soit celui le plus proche de la crosse latérale de la peau de pare-chocs. Ainsi, lors d'un choc, la jambe est guidée en direction des flancs latéraux du véhicule et non pas vers l'axe central longitudinal dudit véhicule du véhicule. Par leur forme, les pattes de fixation contribuent pousser le piéton hors de la course du véhicule. Les pattes de fixation présentent une quatrième fonction qui est une fonction d'orientation et d'aide au dégagement du piéton de devant le véhicule.

On notera qu'il est connu de l'art antérieur et notamment du document US5478127 de fixer en partie haute une grille d'entrée d'air. Mais dans ce document, ladite grille est fixée au niveau du capot et non pas au niveau de l'absorbeur de chocs.

D'autres caractéristiques et avantages de la présente invention seront mieux compris à l'aide de la description et des dessins parmi lesquels :
- La figure 1 est une représentation d'une partie avant d'un véhicule en vue de face.
- La figure 2 est une représentation d'une vue de face d'une moitié de grille et d'absorbeur de chocs supérieur selon l'invention.
- La figure 3 est une représentation illustrant la fixation de la grille sur l'absorbeur de chocs supérieur selon le plan de coupe AA tel que défini sur la figure 2.
- La figure 4 est une représentation illustrant la fixation de la grille sur l'absorbeur de chocs supérieur suivant le plan de coupe BB tel que défini sur la figure 3.

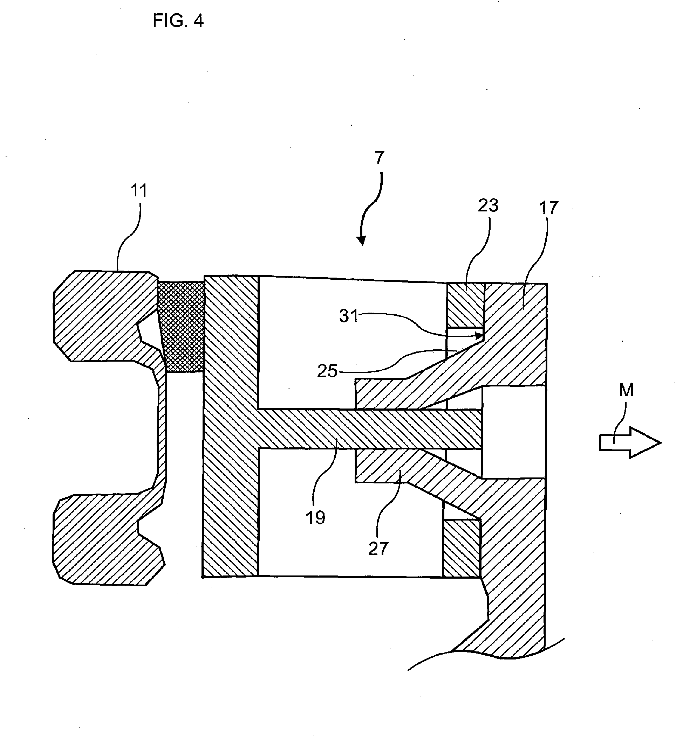

Dans tout ce qui suit, les termes « avant » et « arrière » s'entendent par rapport au sens de marche du véhicule. Ce sens est matérialisé par la flèche M sur la figure 4. Le terme « épaisseur » s'entend comme étant l'épaisseur selon une direction parallèle à la direction longitudinale du véhicule.

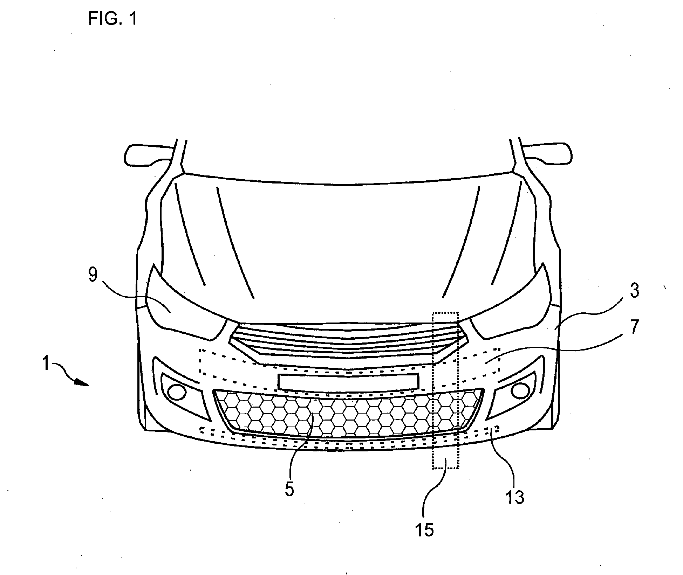

La figure 1 représente l'avant d'un véhicule vu de face. L'ensemble (1) est destiné à équiper l'extrémité longitudinale avant d'un véhicule, de préférence d'un véhicule automobile. L'ensemble (1) est également appelé dans le jargon du métier « bloc pare-chocs ». Cet ensemble (1) est impacté en cas de choc piéton par la jambe (15) dudit piéton et doit permettre de minimiser les blessures qui y sont infligées. L'ensemble (1) comprend une peau de pare-chocs (3), une grille d'entrée d'air (5), deux absorbeurs de chocs supérieur (7) et inférieur (13) représentés en pointillés car se situant à l'arrière de la peau de pare-chocs (3). La peau de pare-chocs (3) est une pièce réalisée par exemple par moulage en matière plastique. Elle comprend une partie centrale avant ou bouclier et deux parties latérales ou crosses. Les crosses prolongent les extrémités latérales du bouclier vers l'arrière de sorte que la peau de pare-chocs (3) a, en vue de dessus, sensiblement une forme de U ouvert vers l'arrière.

Le bouclier présente en vue de dessus une forme galbée de concavité dirigée vers l'arrière. Il comprend une région inférieure, ou spoiler, au niveau de laquelle est fixé l'absorbeur de chocs (13) inférieur, également nommé « appui bas ». Il comprend une région supérieure, au niveau de laquelle est fixé l'absorbeur de chocs (7) supérieur, également nommé « appui haut ». Classiquement, la fixation de l'absorbeur de chocs (7) supérieur à la peau de pare-chocs (3) se fait par clippage. Une ouverture est ménagée dans le bouclier entre le spoiler et la région supérieure pour permettre le passage d'un flux d'air destiné à balayer le radiateur du véhicule. Cette ouverture est recouverte d'une grille (5) d'entrée d'air ou calandre. Cette grille (5) est disposée en arrière du bouclier. Selon l'invention, la grille (5) d'entrée d'air est fixée à l'absorbeur de chocs (7) supérieur.

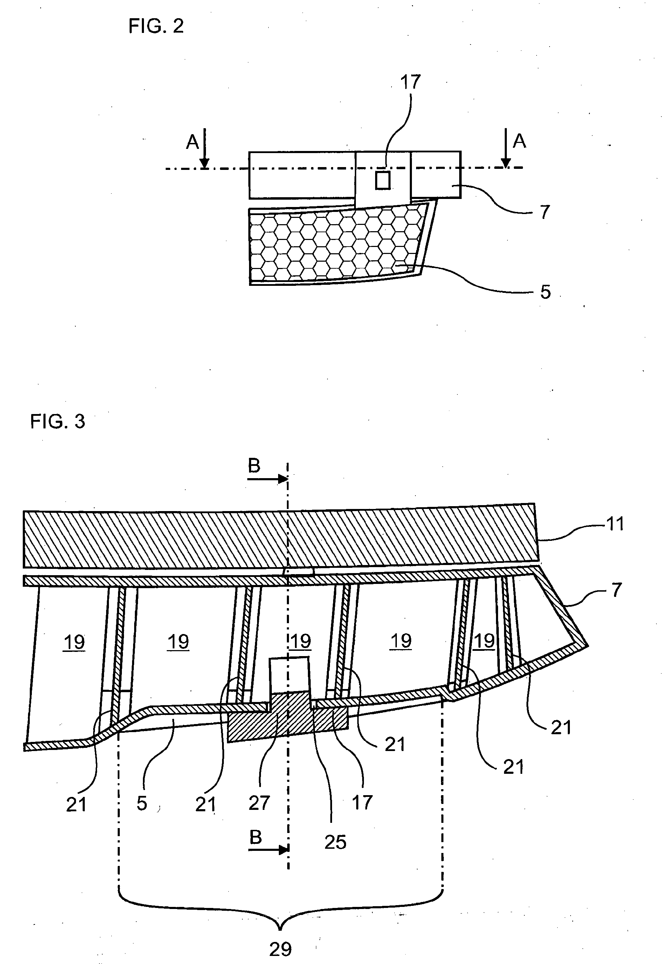

Pour des raisons de style, et afin de permettre une augmentation du galbage présenté par le bouclier, par exemple au niveau des optiques (9) de phares, l'absorbeur de chocs (7) supérieur montre, comme illustré sur la figure 2, au niveau de chacune de ses extrémités latérales une zone (29) présentant une réduction locale d'épaisseur. L'absorption des chocs se faisant par enfoncement et déformation de la structure interne dudit absorbeur de chocs (7) supérieur, cette diminution d'épaisseur implique une diminution locale de la course d'enfoncement possible entre la peau du pare-chocs (3) et une poutre supérieure de structure (11 représentée sur les figures 3 et 4), en cas d'un choc avec un piéton. Or l'absorbeur de chocs (7) supérieur coopère de manière connue avec l'appui bas (13) lors d'un choc avec la jambe (15) d'un piéton pour minimiser les blessures infligées à la jambe et en particulier au genou. Pour ce faire, les vitesses d'enfoncement mesurées au niveau de l'absorbeur de chocs (7) supérieur et de l'appui bas (13) doivent permettre d'amortir le choc de manière uniforme, et en particulier de telle sorte que la jambe ne subisse pas une flexion au niveau du genou qui soit supérieure à 15°. La diminution de volume présentée au niveau de l'absorbeur de chocs (7) supérieur ayant pour conséquence une augmentation de la vitesse d'enfoncement, l'invention va compenser cette réduction locale d'épaisseur de telle sorte à faire travailler l'absorbeur de chocs (7) supérieur au plus vite lors d'une collision avec un piéton.

A cette fin et comme illustré sur la figure 2, la grille (5) d'entrée d'air est fixée, non pas sur la peau de pare-chocs (3) comme dans l'art antérieur, mais sur l'absorbeur de chocs (7) supérieur au niveau de la ou des zones (29) de réduction d'épaisseur. A cet effet, la grille (5) présente des pattes de fixation (17) disposées sensiblement au niveau des extrémités latérales supérieures de ladite grille (5). La grille (5) d'entrée d'air est donc suspendue à l'absorbeur de chocs (7) supérieur. Les pattes de fixations sont configurées pour placer la grille légèrement en retrait par rapport aux absorbeurs de chocs supérieur (7) et inférieur (13). Néanmoins, les pattes de fixation (17) sont disposées sur la face avant de l'absorbeur de chocs (7) supérieur par rapport au sens de marche du véhicule et donc entre l'absorbeur de chocs (7) supérieur et la peau de pare-chocs (3). Les pattes de fixation sont situées au niveau du jeu entre l'absorbeur de chocs (7) supérieur et la peau de pare-chocs (3). Si bien qu'en cas de collision avec un piéton, les pattes de fixation (17) entreront en contact avec la peau de pare-chocs (3) à la place de l'absorbeur de chocs (7) supérieur. Les pattes de fixation (17) présentent une surface se plaçant en appui contre la face avant de l'absorbeur de chocs (7) supérieur. La force exercée sur lesdites pattes de fixation (17) du fait de la collision sera ainsi transmise à l'absorbeur de chocs (7) supérieur. L'absorbeur de chocs (7) supérieur commence son travail d'amortissement dès le contact de la peau de pare-chocs (3) avec les pattes de fixation (17). L'invention est remarquable en ce qu'au niveau des zones de réduction d'épaisseur de l'absorbeur de chocs (7) supérieur, le contact avec la peau de pare-chocs (3) du fait d'une collision avec un piéton se fait de manière indirecte, par l'intermédiaire des pattes de fixation de la grille (5) d'entrée d'air.

La figure 3 présente une vue en coupe selon le plan A-A de l'assemblage présenté à la figure 2. Les pattes de fixation (17) de la grille (5) d'entrée d'air se placent comme on peut le voir en appui sur l'absorbeur de chocs (7) supérieur. L'absorbeur de chocs (7) supérieur présente de manière connue une structure interne comprenant une pluralité de nervures horizontales (19) et verticales (21). Les nervures horizontales (19) sont disposées en alternance avec les nervures verticales (21) et espacées les unes des autres. L'espacement entre deux nervures (19, 21) successives est de l'ordre de 4 à 6 mm et de préférence d'environ 5 mm. L'épaisseur des nervures est de l'ordre de 3 à 4 mm. Selon l'invention, les pattes de fixation sont disposées de sorte à être placées centrées en regard d'au moins une nervure (19, 21) et de préférence d'au moins une nervure horizontale (19). De préférence, la largeur des pattes de fixation (17) est telle qu'elles sont placées en regard de deux et de préférence encore trois nervures successives (19, 21). Par exemple chaque patte de fixation (17) présente une largeur lui permettant d'être placée en regard d'une nervure horizontale (19) et de deux nervures verticales (21), les nervures verticales (21) étant placées de part et d'autre de la nervure horizontale (19). Ainsi, la force exercée sur l'absorbeur de chocs (7) supérieur par les pattes de fixation (17) est répartie sur plusieurs nervures (19, 21). A cet effet les pattes de fixation (17) présentent une surface (31) d'appui, illustrée sur la figure 4, qui est destinée à être placée en appui contre la face avant (23) de l'absorbeur de chocs (7) supérieur lorsque la grille (5) d'entrée d'air est fixée sur ledit absorbeur (7). Par le biais de cette surface d'appui (31) l'invention permet d'augmenter la résistance à l'enfoncement présentée par l'absorbeur de chocs (7) supérieur de manière homogène et de compenser la diminution de la course d'enfoncement. L'invention offre l'avantage de pouvoir maîtriser la résistance à l'enfoncement présentée par l'absorbeur en fonction de son épaisseur sans pour autant avoir à modifier son matériau constitutif ou les propriétés mécaniques dudit matériau.

Selon une mise en oeuvre préférée de l'invention, les pattes de fixation (17) comprennent des clips (27) qui viennent se fixer sur des nervures horizontales (19) de l'absorbeur de chocs (7) supérieur. A cet effet, et comme illustré sur la figure 4, l'absorbeur de chocs (7) supérieur selon l'invention va présenter sur sa face avant (23) au moins un et de préférence au moins deux ajours (25) permettant le passage des clips (27), ou plus précisément de leurs pinces (27) de telle sorte que les clips (27) puissent prendre en sandwich les nervures horizontales (19) en regard desquelles ils sont disposés. De préférence la largeur de l'ajour (25) est inférieure à la largeur de la nervure horizontale (19).

La fixation du clip (17) sur une nervure (19, 21) de l'absorbeur de chocs présente l'avantage d'orienter la déformation de la nervure (19, 21) au moment de la collision, et par là d'assurer un bon maintien dans le temps de la gestion de son enfoncement.

Selon un mode de réalisation préféré de l'invention, la patte de fixation (17) ou clip, présente une forme biseautée de sorte à présenter une épaisseur variable sur sa largeur. Ainsi, lorsque la patte de fixation (17), placée en regard de trois nervures, à savoir une nervure (19) horizontale encadrée par deux nervures verticales (21), est sollicité en premier. Ceci a pour effet de compenser d'avantage la réduction de course au niveau d'une des deux nervures verticales et de générer un comportement à l'enfoncement différent au niveau des deux nervures verticales (21). En conséquent, la jambe (et avec elle le piéton) sera dirigée en direction du côté du biseau le plus fin. Le biseau est avantageusement orienté pour que son côté présentant l'épaisseur la moins épaisse soit le côté le plus proche des crosses de la peau de pare-chocs (3) et donc de l'extérieur du véhicule. La forme biseautée du clip (17) favorise le déplacement du piéton hors de la trajectoire du véhicule.

## Revendications

1. Ensemble (1) pour véhicule comprenant une peau de pare-chocs (3), une grille (5) d'entrée d'air et un absorbeur de chocs (7) supérieur, présentant une succession de nervures internes verticales (21) s'étendant entre une face avant (23) et une face arrière dudit absorbeur (7), la grille (5) d'entrée d'air étant fixée sur le dit absorbeur (7), ensemble (1) **caractérisé en ce que** l'absorbeur de chocs (7) supérieur présente une succession de nervures internes verticales (21) et horizontales (19) s'étendant entre la face avant (23) et la face arrière dudit absorbeur (7), lesdites nervures verticales (21) étant disposées en alternance avec lesdites nervures horizontales (19) et espacées les unes des autres, et l'absorbeur de chocs (7) supérieur montre au moins une zone (29) présentant une réduction d'épaisseur, et au moins un ajour (25) situé au niveau d'une des nervures horizontales (19) de telle sorte que la grille (5) d'entrée d'air soit fixée sur l'absorbeur de chocs (7) supérieur au niveau de cette zone (29) d'épaisseur réduite, sur au moins une nervure horizontale (19) par passage de moyens de fixation (27) au travers dudit ajour (25), de préférence la largeur de l'ajour (25) étant inférieure à la largeur de la nervure horizontale (19).

2. Ensemble (1) selon la revendication 1, l'absorbeur de chocs (7) supérieur présentant une face avant (23) et une face arrière **caractérisé en ce que** la grille (5) d'entrée d'air présente au moins une patte de fixation (17) et de préférence deux pattes de fixation (17) pour sa fixation sur l'absorbeur de chocs (7) supérieur et **en ce que** la ou lesdites pattes de fixation (17) sont configurées pour se placer sur la face avant (23) de l'absorbeur de chocs (7) supérieur en vue de la fixation de ladite grille (5).

3. Ensemble (1) selon la revendication 2 **caractérisé en ce que** la ou les pattes de fixations (17) présentent des moyens de fixation (27) à l'absorbeur de chocs (7) supérieur et une surface (31) destinée à être placée en appui contre la face avant (23) de l'absorbeur de chocs (7) supérieur lorsque la grille (5) d'entrée d'air est fixée sur ledit absorbeur (7).

4. Ensemble (1) selon l'une quelconque des revendications précédentes, **caractérisé en ce que** la fixation de la grille d'entrée (5) sur la ou les nervures horizontales (19) se fait par emboitage élastique, de préférence la ou les pattes de fixation (17) présentent chacune un clip (27) permettant de pincer la nervure horizontale (19) en regard de laquelle elle est placée.

5. Ensemble (1) selon l'une des revendications précédentes **caractérisé en ce que** la ou les pattes de fixation (17) de la grille (5) d'entrée d'air sont dimensionnées pour présenter chacune une largeur au moins égale à la largeur de la nervure horizontale (19) en regard de laquelle elles sont chacune placées en vue de la fixation de ladite grille (5) sur ledit absorbeur (7) et de préférence la largeur desdites pattes de fixation (17) est au moins égale à la largeur présenté par l'ensemble formé d'une nervure horizontale (19) encadrée par deux nervures verticales (21).

6. Ensemble (1) selon l'une des revendications précédentes **caractérisé en ce que** la ou les pattes de fixation (17) présentent une forme biseautée de telle sorte à varier en épaisseur selon leur largeur.

7. Ensemble (1) selon la revendication 6, la peau de pare-chocs (3) présentant un centre et des bords latéraux, **caractérisé en ce que** le biseau présenté par les pattes de fixation (17) est orienté pour que lesdites pattes présentent une épaisseur décroissante dans le sens allant du centre de la peau de pare-chocs (3) vers ses bords latéraux.

8. Absorbeur de chocs (7) supérieur destiné à être utilisé dans un ensemble (1) selon l'une des revendications 1 à 7, ledit absorbeur (7) comprenant une face avant (23) et une face arrière et, entre ses deux faces avant et arrière, une succession de nervures internes verticales (21) **caractérisé en ce qu'**il comprend entre ses deux faces avant et arrière une succession de nervures internes verticales (21) et horizontales (19) disposées en alternance et espacées les unes des autres, et **en ce qu'**il présente au moins une zone (29) d'épaisseur réduite formant un décrochage sur sa face avant (23) et au moins un ajour (25) au niveau de ce dit décrochage, le dit ajour (25) étant placé au niveau d'une nervure horizontale (19).

9. Véhicule **caractérisé en ce qu'**il présente un ensemble selon l'une des revendications 1 à 7.

## Patentansprüche

1. Baugruppe (1) für ein Fahrzeug, die eine Stoßfängerhaut (3), ein Lufteingangsgitter (5) und einen oberen Stoßdämpfer (7) umfasst, der eine Abfolge innerer vertikaler Rippen (21) aufweist, die sich zwischen einer Vorderseite (23) und einer Rückseite des Dämpfers (7) erstrecken, wobei das Lufteingangsgitter (5) auf dem Dämpfer (7) befestigt ist, Baugruppe (1) **dadurch gekennzeichnet, dass** der obere Stoßdämpfer (7) eine Abfolge innerer vertikaler (21) und horizontaler (19) Rippen aufweist, die sich von der Vorderseite (23) und der Rückseite des Dämpfers (7) erstrecken, wobei die vertikalen Rippen (21) abwechselnd mit den horizontalen Rippen (19) angeordnet und voneinander beabstandet sind, und der obere Stoßdämpfer (7) mindestens eine Zone (29) zeigt, die eine Stärkenverringerung aufweist, und mindestens einen Durchbruch (25), der derart auf dem Bereich einer der horizontalen Rippen (19) liegt, dass das Lufteingangsgitter (5) an dem oberen Stoßdämpfer (7) auf dem Niveau dieser Zone (29) mit verringerter Stärke auf mindestens einer der horizontalen Rippen (19), durch Durchgehen von Befestigungsmitteln (27) durch den Durchbruch (25) befestigt ist, wobei die Breite des Durchbruchs (25) vorzugsweise kleiner ist als die Breite der horizontalen Rippe (19).

2. Baugruppe (1) nach Anspruch 1, wobei der obere Stoßdämpfer (7) eine Vorderseite (23) und eine Rückseite aufweist, **dadurch gekennzeichnet, dass** das Lufteingangsgitter (5) mindestens eine Befestigungspratze (17) und vorzugsweise zwei Befestigungspratzen (17) zu seiner Befestigung auf dem oberen Stoßdämpfer (7) aufweist, und dass die Befestigungspratze(n) (17) ausgelegt sind, um sich auf der Vorderseite (23) des oberen Stoßdämpfers (7) zur Befestigung des Gitters (5) zu platzieren.

3. Baugruppe (1) nach Anspruch 2, **dadurch gekennzeichnet, dass** die Befestigungspratze(n) (17) Mittel zum Befestigen (27) an dem oberen Stoßdämpfer (7) aufweisen, und eine Oberfläche (31), die dazu bestimmt ist, in Auflage gegen die Vorderseite (23) des oberen Stoßdämpfers (7) platziert zu werden, wenn das Lufteingangsgitter (5) an dem Dämpfer (7) befestigt ist.

4. Baugruppe (1) nach einem der vorhergehenden Ansprüche, **dadurch gekennzeichnet, dass** die Befestigung des Eingangsgitters (5) auf der oder den horizontalen Rippen (19) durch elastisches Einrasten erfolgt, die Befestigungspratze(n) (17) vorzugsweise jeweils einen Clip (27) aufweisen, der es erlaubt, die horizontale Klemme (19) gegenüber welcher er platziert ist, einzuklemmen.

5. Baugruppe (1) nach einem der vorhergehenden Ansprüche, **dadurch gekennzeichnet, dass** die Befestigungspratze(n) (17) des Lufteingangsgitters (5) bemessen sind, um jeweils eine Breite aufzuweisen, die mindestens gleich der Breite der horizontalen Rippe (19) ist, gegenüber welcher sie jeweils zur Befestigung des Gitters (5) auf dem Dämpfer (7) platziert sind, und die Breite der Befestigungspratzen (17) vorzugsweise mindestens gleich der Breite ist, die die Einheit gebildet aus einer horizontalen Rippe (19) eingefasst durch zwei vertikale Rippen (21) aufweist.

6. Baugruppe (1) nach einem der vorhergehenden Ansprüche, **dadurch gekennzeichnet, dass** die Befestigungspratze(n) (17) eine abgeschrägte Form derart aufweisen, dass sie in der Stärke entlang ihrer Breite variieren.

7. Baugruppe (1) nach Anspruch 6, wobei die Stoßfängerhaut (3) eine Mitte und seitliche Ränder aufweist, **dadurch gekennzeichnet, dass** die Abschrägung, die die Befestigungspratzen (17) aufweisen, ausgerichtet ist, damit die Pratzen eine abnehmende Stärke in die Richtung aufweisen, die von der Mitte der Stoßfängerhaut (3) zu ihren seitlichen Rändern verläuft.

8. Oberer Stoßdämpfer (7), der dazu bestimmt ist, in einer Baugruppe (1) nach einem der Ansprüche 1 bis 7 verwendet zu werden, wobei der Dämpfer (7) eine Vorderseite (23) und eine Rückseite umfasst, und zwischen seiner Vorderseite und seiner Rückseite eine Abfolge innerer vertikaler Rippen (21), **dadurch gekennzeichnet, dass** er zwischen seiner Vorderseite und seiner Rückseite eine Abfolge innerer vertikaler Rippen (21) und horizontaler Rippen (19) aufweist, die abwechselnd und voneinander beabstandet angeordnet sind, und dass er mindestens eine Zone (29) mit verringerter Stärke aufweist, die einen Absatz auf seiner Vorderseite (23) bildet, und mindestens einen Durchbruch (25) auf dem Niveau dieses Absatzes, wobei der Durchbruch (25) auf dem Niveau einer horizontalen Rippe (19) platziert ist.

9. Fahrzeug, **dadurch gekennzeichnet, dass** es eine Baugruppe nach einem der Ansprüche 1 bis 7 aufweist.

## Claims

1. An assembly (1) for a vehicle including a bumper skin (3), an air intake screen (5) and an upper shock absorber (7) having a succession of vertical internal ribs (21) extending between a front face (23) and a rear face of said absorber (7), the air intake screen (5) being fixed on said absorber (7), the assembly (1) **characterized in that** the upper shock absorber (7) has a succession of vertical (21) and horizontal (19) internal ribs extending between the front face (23) and the rear face of said absorber (7), said vertical ribs (21) being disposed alternately with said horizontal ribs (19) and spaced from one another, and **in that** the upper shock absorber (7) shows at least one zone (29) with reduced thickness, and at least one opening (25) situated at the level of one of the horizontal ribs (19) such that the air intake screen (5) is fixed on the upper shock absorber (7) at the level of this zone (29) of reduced thickness, on at least one horizontal rib (19) by passage of fixing means (27) through said opening (25), preferably the width of the opening (25) being less than the width of the horizontal rib (19).

2. The assembly (1) according to Claim 1, the upper shock absorber (7) having a front face (23) and a rear face **characterized in that** the air intake screen (5) has at least one fixing lug (17) and preferably two fixing lugs (17) for its fixing on the upper shock absorber (7) and **in that** said fixing lug(s) (17) are configured to be placed on the front face (23) of the upper shock absorber (7) with a view to the fixing of said screen (5).

3. The assembly (1) according to Claim 2, **characterized in that** the fixing lug(s) (17) have means (27) for fixing to the upper shock absorber (7) and a surface (31) intended to be placed resting against the front face (23) of the upper shock absorber (7) when the air intake screen (5) is fixed on said absorber (7).

4. The assembly (1) according to any one of the preceding claims, **characterized in that** the fixing of the intake screen (5) on the horizontal rib(s) (19) is carried out by elastic engagement, preferably the fixing lug(s) (17) each have a clip (27) permitting the gripping of the horizontal rib (19) opposite which it is placed.

5. The assembly (1) according to one of the preceding claims, **characterized in that** the fixing lug(s) (17) of the air intake screen (5) are dimensioned to each have a width at least equal to the width of the horizontal rib (19) opposite which they are each placed with a view to the fixing of said screen (5) on said absorber (7) and preferably the width of said fixing lugs (17) is at least equal to the width presented by the assembly formed by a horizontal rib (19) surrounded by two vertical ribs (21).

6. The assembly (1) according to one of the preceding claims, **characterized in that** the fixing lug(s) (17) have a bevelled shape so as to vary in thickness according to their width.

7. The assembly (1) according to Claim 6, the bumper skin (3) having a centre and lateral edges, **characterized in that** the bevel presented by the fixing lugs (17) is oriented so that said lugs have a decreasing thickness in the direction going from the centre of the bumper skin (3) towards its lateral edges.

8. An upper shock absorber (7) intended to be used in an assembly (1) according to one of Claims 1 to 7, said absorber (7) including a front face (23) and a rear face and, between its two front and rear faces, a succession of vertical internal ribs (21), **characterized in that** it includes between its two front and rear faces a succession of vertical (21) and horizontal (19) internal ribs, disposed alternately and spaced with respect to one another, and **in that** it has at least one zone (29) with reduced thickness forming a cutaway on its front face (23) and at least one opening (25) at the level of this said cutaway, said opening (25) being placed at the level of a horizontal rib (19).

9. A vehicle, **characterized in that** it has an assembly according to one of Claims 1 to 7.
